# FASCICULE DE BREVET EUROPEEN

(11) **EP 0 628 898 B1**
(45) Date de publication et mention de la délivrance du brevet: **05.03.1997**
(21) Numéro de dépôt: 94401074.3
(22) Date de dépôt: 11.05.1994
(51) Int. Cl.: G05D 1/00

(54) **Dispositif de pilotage automatique pour aérodynes**
Gerät zur automatischen Flugzeugsteuerung
Device for automatic aircraft control

(30) Priorité: 07.06.1993 FR 9306863
(43) Date de publication de la demande: 14.12.1994
(73) Titulaire: SEXTANT AVIONIQUE, F-92366 Meudon la Foret Cédex (FR)
(72) Inventeur: Pierson, Benoit, F-75014 Paris (FR); Guiol, Georges, F-91470 Limours (FR); Limon, Florence, F-91170 Gif sur Yvette (FR)
(74) Mandataire: de Saint-Palais, Arnaud Marie

(56) Documents cités:
- WO-A-84/00071
- 9TH DIGITAL AVIONICS SYSTEMS CONFERENCE, 15 Octobre 1990, VIRGINIA BEACH pages 306 - 309, XP224577 HERBELLA 'modularity concepts for the multi-path redundant avionics suite(mpras)'
- IEEE PLANS'92 POSITION LOCATION AND NAVIGATION SYMPOSUIM RECORD, 1 Janvier 1992 pages 173 - 178, XP344299 ROBINSON ET AL 'advanced real time integrated processors'

## Description

La présente invention concerne un dispositif de pilotage automatique d'un aérodyne tel que, par exemple, un hélicoptère.

De tels dispositifs ont généralement pour but de décharger le pilote d'un certain nombre de tâches en améliorant les caractéristiques de vol de l'aérodyne qui est généralement instable, et en assurant certaines tâches de pilotage comme le maintien de l'aérodyne dans une certaine trajectoire choisie par le pilote.

Les dispositifs de pilotage automatique destinés à équiper les hélicoptères ont plus particulièrement pour but d'améliorer la stabilité de l'appareil en pilotage manuel, et d'offrir au pilote une impression de plus grande stabilité et d'homogénéité concernant les caractéristiques des effets des différentes gouvernes.

Jusqu'à présent, ces dispositifs effectuaient, pour chacun des trois axes de pilotage, tangage, roulis et lacet, un calcul analogique permettant de commander le jeu d'actionneurs qui agissent sur les gouvernes en fonction des commandes du pilote et des informations fournies par des capteurs.

Généralement, les actionneurs d'un axe de pilotage comprennent un vérin série d'autorité faible dont le mouvement est très rapide, et un vérin de "trim" possédant pleine autorité, dont le mouvement est plus lent, destiné à recentrer la position du vérin série.

Etant donné que chaque axe présente des lois d'asservissement différentes, chaque calcul est différent. Il en résulte que le coût d'un tel dispositif est très élevé, chaque calculateur devant être conçu, testé et certifié individuellement.

Par ailleurs, un hélicoptère est destiné à remplir un grand nombre de missions. Pour être autorisé à voler et à remplir ces missions dans des conditions de sécurité suffisantes, l'hélicoptère doit être présenté en certification. Cette certification porte essentiellement sur la sécurité de l'hélicoptère et des tiers survolés. Elle concerne les organes pouvant influer sur son niveau de sécurité, et notamment sur le dispositif de pilotage automatique.

Pour des raisons de coût et parce que les caractéristiques de vol des hélicoptères peuvent être très différentes d'un modèle à l'autre, on est amené à adapter leur équipement à leurs caractéristiques et aux missions qui leur sont destinées.

Depuis l'apparition des technologies numériques, on a proposé, dans le but d'intégrer un grand nombre dé fonctions dans un système moins encombrant, évolutif et de maintenance plus aisée, d'intégrer toutes les fonctions des trois calculs analogiques du dispositif de pilotage automatique dans un seul calculateur numérique. Cette solution permet une grande souplesse d'adaptation du dispositif à chaque type d'utilisation, cette adaptation pouvant s'effectuer par simple changement de version du programme qui pilote les actionneurs.

De tels calculateurs numériques de pilotage automatique ont par exemple été décrits dans la demande de brevet WO-A-84 00071, et dans le document IEEE Plans'92 Position Location And Navigation Symposium Record, 1er janv. 1992, pages 173-178, "Advanced Real Time Integrated Processors" de Robinson et al.

Cependant, si cette solution évite d'avoir à réaliser un calculateur par type d'appareil et par type de mission, elle ne supprime pas l'étape de certification qui doit porter sur chaque version.

Par ailleurs, la puissance de calcul nécessaire varie d'une façon importante suivant que l'on a à commander un ou trois axes simultanément, et donc, pour optimiser les coûts, on est quand même amené à proposer plusieurs configurations matérielles du dispositif de pilotage pour s'adapter au mieux aux besoins de la mission.

Les calculateurs numériques de pilotage automatique se composent généralement de plusieurs cartes électroniques correspondant au coeur numérique, à l'alimentation, à la gestion des entrées sorties, et à la génération des commandes de puissance des actionneurs. Toutes ces cartes communiquent entre elles par l'intermédiaire d'une carte d'interconnexion, dite "de fond de panier".
Cette structure implique que chaque carte doit être identifiée séparément, avant intégration et identification de l'ensemble du calculateur.
En outre, pour réparer un calculateur défaillant, il est nécessaire de tester l'ensemble pour localiser la carte défaillante. Une fois réparée ou remplacée, cette dernière doit être testée séparément, puis intégrée à l'ensemble du calculateur qui doit subir à nouveau l'examen de recette. Cette structure conduit donc à des procédures de maintenance et de recette relativement lourdes, et donc coûteuses.

La présente invention a plus particulièrement pour but de supprimer ces inconvénients en proposant un dispositif de pilotage automatique d'un aérodyne, faisant intervenir un calculateur numérique recevant des informations émanant d'un ensemble de capteurs et assurant la commande d'actionneurs agissant sur les gouvernes.
Ce dispositif est caractérisé en ce que le calculateur comporte au moins un module de calcul comprenant :
- des moyens pour calculer et engendrer les commandes de pilotage à appliquer aux actionneurs agissant sur l'un quelconque des trois axes de pilotage, en fonction des informations fournies par les capteurs,
- des moyens de connexion pour connecter les moyens de calcul aux capteurs et aux actionneurs correspondant à l'un quelconque des trois axes de pilotage, et
- des moyens pour configurer les moyens de calculs pour qu'ils effectuent le pilotage automatique selon l'axe de pilotage correspondant aux actionneurs auxquels les moyens de connexion sont raccordés.

Dans ce dispositif, chaque module de calcul met en oeuvre une technologie numérique et analogique, et pour pouvoir traiter indifféremment chaque axe de pilotage, il intègre les fonctions spécifiques à chaque axe de pilotage.

Ainsi, pour pouvoir traiter simultanément les trois axes de pilotage, ce dispositif de pilotage automatique est capable de recevoir trois modules de calcul identiques, chacun pouvant être entièrement indépendant des deux autres. De cette manière, une défaillance d'un des modules ne risque donc pas de perturber les deux autres. Cette disposition peut permettre d'éviter d'avoir à multiplier les chaînes de calcul pour assurer un certain niveau de sécurité.

En outre, cette approche modulaire permet de proposer une configuration adaptée à chaque type d'hélicoptère et à chaque type de certification, la configuration minimale ne comportant qu'un seul module de calcul qui assure donc la commande d'un seul axe de pilotage.

Selon une particularité de l'invention, chaque module de calcul intègre sur une seule carte, la connectique qui lui permet de s'interfacer directement avec les capteurs et les actionneurs, et un circuit de puissance lui permettant de commander directement les actionneurs, aucune interconnexion entre modules n'étant prévue à l'intérieur du boîtier réunissant les modules.

Grâce à cette configuration, le test et la maintenance du calculateur se limitent au test et à la maintenance des modules de calcul, indépendamment les uns des autres.

Par ailleurs, certains actionneurs sont équipés d'un circuit de commande de puissance. Il faut donc dans ce cas prévoir des modules de calculs sans circuit de commande de puissance.

Dans le but d'améliorer encore la souplesse d'adaptation et donc de réduire les coûts de réalisation et de maintenance d'un tel calculateur, chaque module de calcul comprend au moins un module enfichable regroupant les circuits de commande de puissance et de gestion des entrées et sorties qui sont le plus susceptibles de varier d'une configuration à une autre.

Grâce à cette disposition, le module de calcul peut s'adapter finement sans aucune modification de son architecture à la plupart des configurations possibles du dispositif de pilotage automatique.

Toutes ces dispositions permettent d'obtenir un dispositif de pilotage automatique modulaire, simplifié du point de vue matériel, et donc de coûts de fabrication et de maintenance notablement plus réduits que les systèmes déjà proposés.

Un mode de réalisation du dispositif selon l'invention sera décrit ci-après, à titre d'exemple non limitatif, avec référence aux dessins annexés dans lesquels :
la figure 1 représente schématiquement le dispositif de pilotage automatique au sein d'une chaîne de pilotage selon un axe de pilotage d'hélicoptère ;
la figure 2 représente schématiquement l'architecture matérielle du calculateur connecté aux actionneurs et à l'ensemble de capteurs ;
la figure 3 représente schématiquement l'architecture matérielle d'un module du calculateur ;
la figure 4 représente en vue éclatée le boîtier du calculateur dans lequel peut être inséré un, deux ou trois modules identiques ;
la figure 5 montre trois connecteurs extérieurs présentant différents schémas de connexion ;
la figure 6 montre le schéma un module de calcul pourvu d'un module enfichable ;
la figure 7 représente schématiquement un module enfichable ;
les figures 8 et 9 représentent schématiquement deux parties du circuit de commande de puissance.
la figure 10 représente un exemple d'un circuit de gestion des entrées et sorties ;
les figures 11, 12 et 13 montrent plusieurs exemples de configurations possibles du dispositif de pilotage.

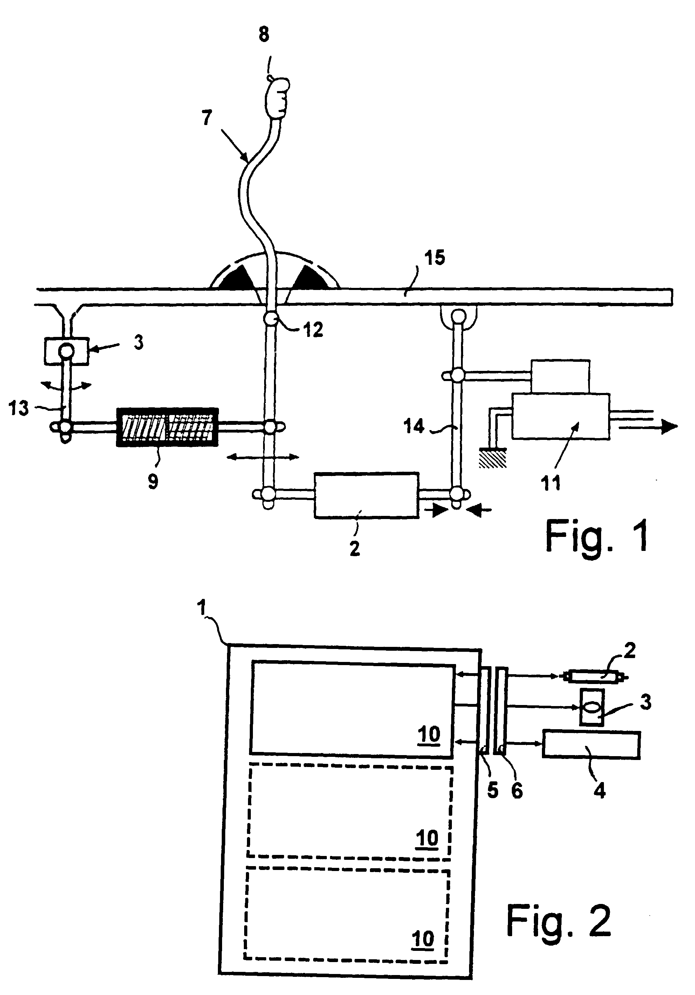

La figure 1 représente les différents éléments de pilotage selon l'un des axes de tangage ou de roulis. Ces éléments comprennent un manche à balais 7 actionné par le pilote, et qui traverse le plancher 15 du poste de pilotage pour pivoter autour d'un axe 12. L'extrémité opposée au manche 7 se prolonge pour former un levier sur lequel agissent d'une part, un dispositif 9 destiné à appliquer sur le manche une force résistante obéissant à une loi d'effort prédéterminée, et d'autre part, un vérin série 2.

Ce dispositif 9 comporte un point d'appui fixé à un levier 13 actionné par un moteur 3, appelé vérin de "trim" et fixé au plancher 15.
L'autre extrémité du vérin série 2 actionne un autre levier 14 qui pivote autour d'un axe solidaire du plancher 15. Ce levier 14 permet d'actionner le distributeur d'un système hydraulique 11 qui agit directement sur les gouvernes de l'hélicoptère.
Dans cette structure, le vérin de "trim" 3 est destiné à recentrer lentement en décalant toute la timonerie, la position du vérin série 2 dont le mouvement est très rapide afin de le ramener dans sa position neutre et de lui restituer toute son autorité de pilotage.

Sur la figure 2, le calculateur 1 comprend un module 10 qui échange des informations avec un ensemble 4 représentant les capteurs, le poste de commande de l'hélicoptère et éventuellement un équipement de test.
Il est conçu pour recevoir deux autres modules 10 (représentés en traits interrompus) identiques au premier, permettant de contrôler les deux autres axes de pilotage de l'hélicoptère.

Le module 10 permet de commander directement les vérins série 2 et de "trim" 3 d'un axe de pilotage, en fonction des informations en provenance de l'ensemble 4. Pour cela il possède un connecteur mâle 5 dans lequel vient s'engager un connecteur femelle 6 rassemblant toutes les extrémités des liaisons électriques provenant des capteurs, des actionneurs et du poste de pilotage.

Cette figure montre la configuration minimale offerte par le dispositif de pilotage automatique. Selon cette configuration, le calculateur 1 comprend un seul module 10 dédié au contrôle du pilotage, par exemple, suivant l'axe de lacet.
Cette configuration permet notamment de réaliser un amortisseur de lacet ou une tenue automatique de cap en fonction des informations issues des capteurs disponibles et connectés.

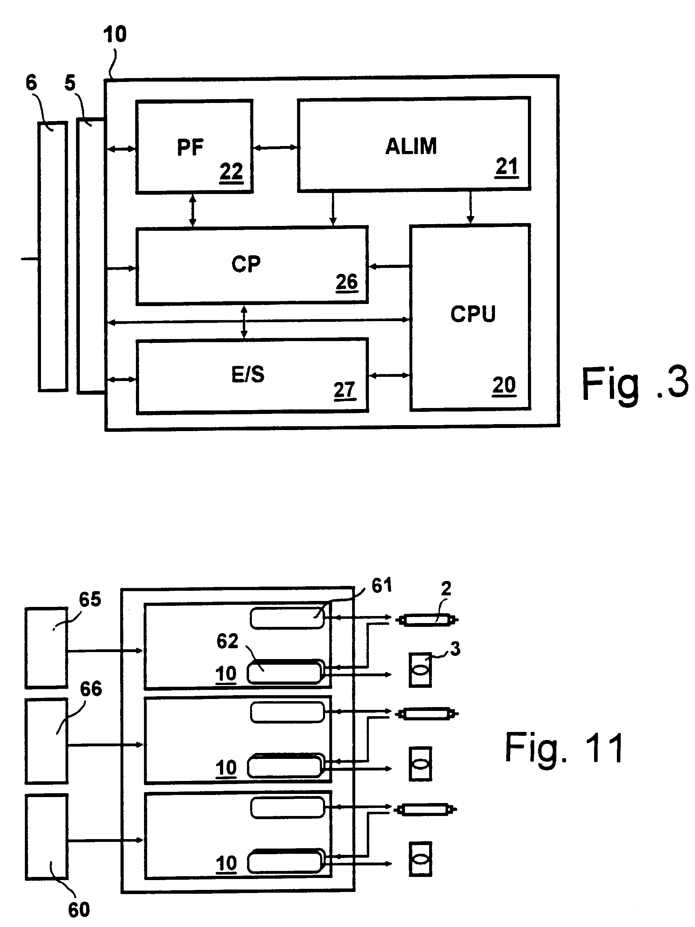

Sur la figure 3, chaque module 10 comprend :
- un coeur numérique 20 mettant en oeuvre notamment un microprocesseur et des mémoires permettant de stocker un programme et des données ;
- un circuit 27 de gestion des entrées et sorties de données, qu'elles soient numériques ou analogiques, en provenance ou à destination des autres modules 10 du calculateur 1 et des autres équipements de l'hélicoptère ;
- un circuit de commande de puissance 26 des actionneurs d'un axe de pilotage qui reçoit la valeur de la position du vérin série, et, du coeur numérique 20, les consignes de commande analogique à appliquer sur les actionneurs de l'axe de pilotage considéré ;
- un circuit d'alimentation 21 permettant d'alimenter en courant continu les différents circuits du module 10 ; et
- un circuit de filtrage et de protection 22 contre les effets de la foudre et des rayonnements électromagnétiques qui protège notamment les commandes de puissance provenant du circuit de commande de puissance 26 destinées aux actionneurs de l'axe de pilotage.

Le circuit de gestion des entrées et sorties 27 peut recevoir notamment des données en provenance des autres équipements de l'hélicoptère, comme par exemple, de la centrale de verticale, des altimètres, des systèmes de navigation par suivi de balises de radionavigation, ou de mesure de la vitesse par rapport à l'air. Ces informations pourront être exploitées par le coeur numérique 20 pour exécuter des fonctions de plus haut niveau, comme par exemple des fonctions de navigation.

Le coeur numérique 20 communique directement avec le poste de pilotage et les équipements de test par une liaison série. Il dispose de toutes les ressources matérielles et logicielles pour assurer les fonctions suivantes :
- l'initialisation du module et du programme,
- l'ordonnancement temps réel et gestion des interruptions,
- la gestion des ports d'entrée/sortie, de la mémoire, et du chargement du programme,
- le calcul de la consigne de pilotage à appliquer sur les actionneurs auxquels il est connecté, à l'aide des lois de pilotage de l'axe considéré,
- la maintenance du système et la gestion des tests à effectuer avant et pendant chaque vol, et
- la gestion des liaisons séries qui lui permettent de communiquer avec les équipements de test et le poste de pilotage.

La fonction de calcul des consignes comprend également des fonctions de pilotage de haut niveau, comme par exemple, des fonctions de navigation.

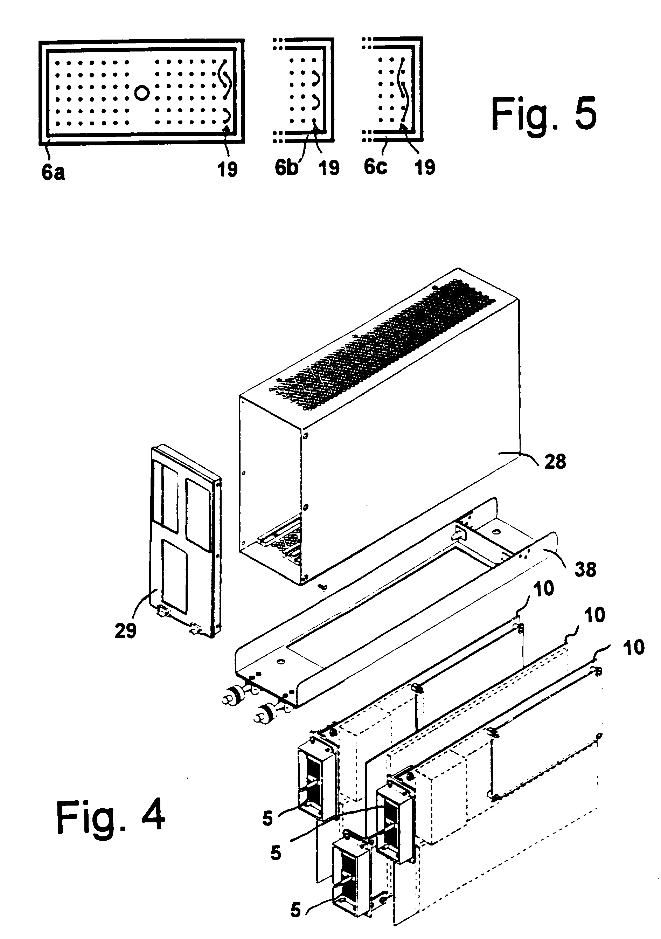

Tel que représenté figure 4, le calculateur 1 comprend un boîtier parallélépipédique 28 fermé par une face avant 29 présentant trois ouvertures rectangulaires, et un socle de fixation 38. Dans ce boîtier peut être inséré un à trois modules 10 identiques se présentant sous la forme d'une carte électronique comportant notamment un connecteur multibroches mâle 5 accessible par l'une des ouvertures de la face avant 29.

Comme les lois de pilotage à mettre en oeuvre sont différentes suivant les axes de pilotage, les fonctions de calcul des consignes et de test incluent des fonctions spécifiques à chaque axe de pilotage. Pour déterminer quelles sont les lois à appliquer, chaque module 10 reconnaît l'axe de pilotage qu'il doit traiter d'après le mode de connexion de son connecteur extérieur. De cette manière, aucune manipulation particulière n'est requise pour indiquer à chaque module 10, quel axe de pilotage il doit contrôler.

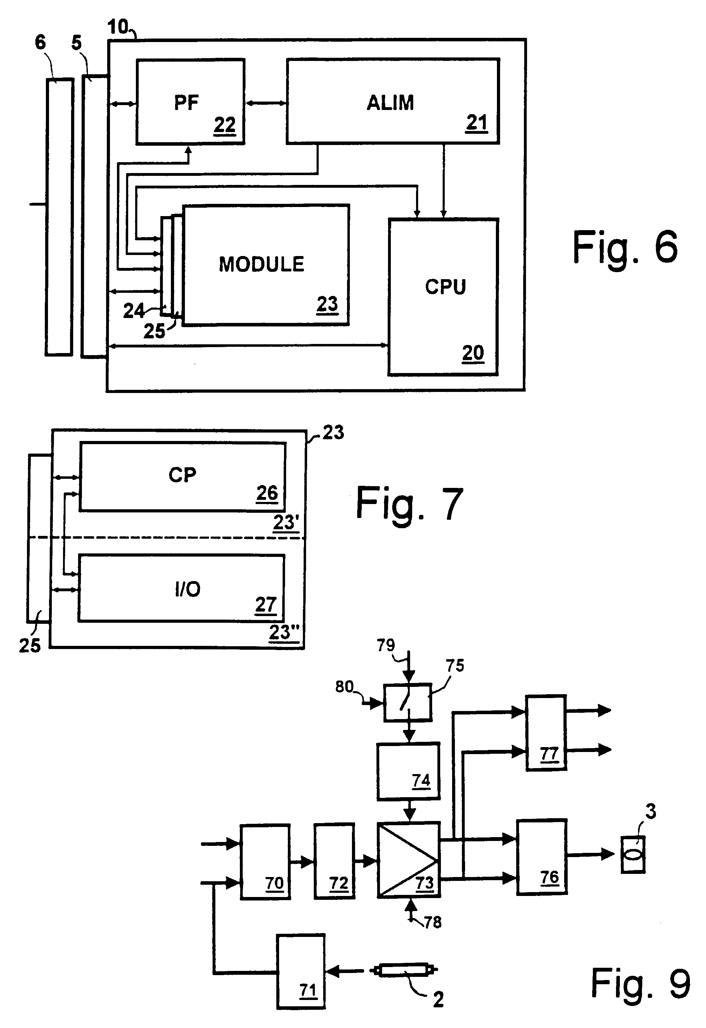

A cet effet, les connecteurs 5,6 comprennent un ensemble de points de connexion libres 19 (correspondant à une colonne de points sur le connecteur) qui sont utilisés pour permettre à chaque module de calcul de reconnaître l'axe de pilotage correspondant aux actionneurs et aux capteurs auxquels il est connecté, de manière à pouvoir s'auto-configurer. La figure 5 montre trois exemples d'interconnexion entre les points de cet ensemble 19 réalisés sur le connecteur femelle 6 relié à l'environnement du module 10.
Par ailleurs, le coeur numérique de chaque module 10 dispose d'une fonction d'auto-configuration qui se déclenche lors de la mise sous tension du module pour déterminer les interconnexions qui sont réalisées entre les points de cet ensemble 19 au niveau du connecteur femelle 6, chaque axe de pilotage correspondant à un schéma spécifique d'interconnexions.
A cet effet, la fonction d'auto-configuration place successivement au niveau logique "1" chaque point de cet ensemble 19, et lit les niveaux logiques des autres points de ce même ensemble 19.

Afin de garantir que deux modules ne puissent pas être affectés au même axe, la fonction d'auto-configuration établit un dialogue entre les modules du boîtier 11 au cours duquel chaque module émet un code d'identification de l'axe auquel il est connecté et vérifie qu'aucun autre module n'a émis le même code.

Selon le mode d'exécution représenté sur la figure 6, les circuits de commande de puissance et de gestion des entrées et sorties sont regroupés dans un module enfichable 23. A cet effet, chaque module de calcul 10 comprend un connecteur 24 destiné à recevoir un connecteur 25 dont est pourvu le module enfichable 23.
Sur la figure 7, chaque module enfichable 23 comprend :
- un circuit 27 de gestion des entrées et sorties de données, qu'elles soient numériques ou analogiques, en provenance ou à destination des autres équipements de l'hélicoptère, et éventuellement des autres modules de calcul 10 du calculateur 1 ; et
- un circuit de commande de puissance 26 des actionneurs d'un axe de pilotage qui reçoit la valeur de la position du vérin série, et, du coeur numérique 20, les consignes de commande analogique à appliquer sur les actionneurs de l'axe de pilotage considéré.

Dans le but d'augmenter encore sa souplesse d'adaptation, le module de calcul 10 peut recevoir deux modules enfichables 23' et 23'', l'un 23' incluant le circuit de commande de puissance 26, et l'autre 23'' le circuit de gestion des entrées et sorties 27.

Ainsi, dans le cas où les actionneurs sont équipés de leur propre circuit de commande de puissance, le module de calcul reçoit uniquement le module enfichable 23'' incluant le circuit de des entrées et sorties 27 adapté à cette configuration.

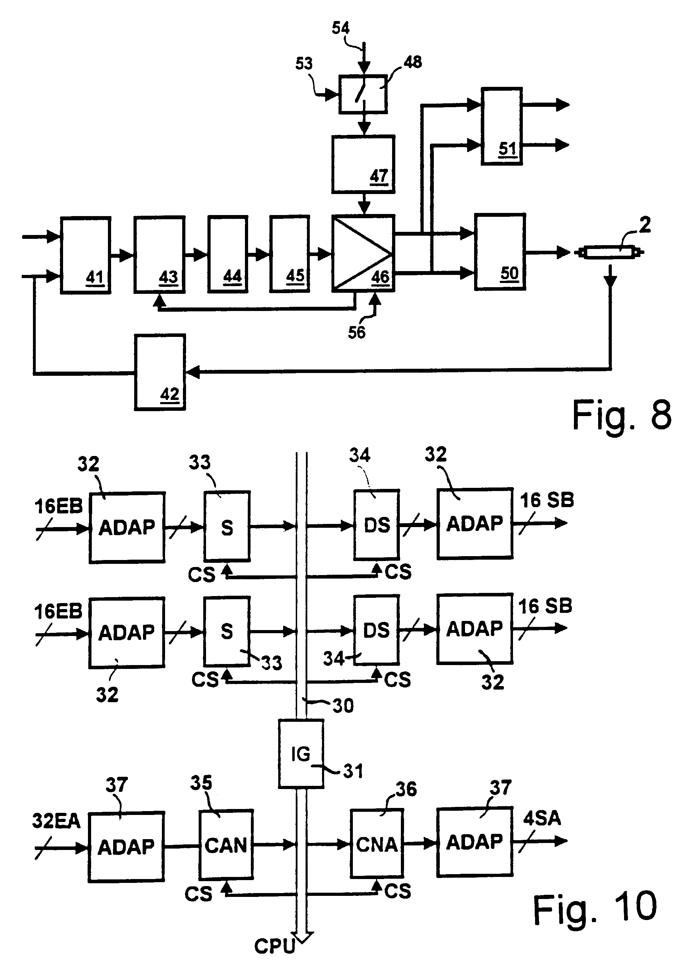

Le circuit de commande de puissance 26, qu'il soit situé dans le module de calcul 10 ou dans un module enfichable 23 ou 23' comprend deux circuits indépendants, l'un permettant de commander le vérin série (figure 8), tandis que l'autre permet de commander le vérin de "trim" (figure 9).

Le circuit représenté sur la figure 8 permet de commander le moteur du vérin série 2 à partir de la consigne élaborée par le coeur numérique 20 et convertie en consigne analogique par le circuit de gestion 27 des entrées/sorties.
Ce circuit reçoit également en entrée, la valeur de la position du vérin série, qui passe préalablement par un circuit d'adaptation 42.
La consigne analogique et la valeur de la position du vérin série sont tout d'abord additionnées par un sommateur 41 dont la valeur résultante attaque un générateur d'impulsions 43.

Le signal en sortie du générateur d'impulsions 43 traverse un circuit d'adaptation 44, puis d'isolation galvanique 45, avant d'être traité par un amplificateur de puissance à pont en H 46. Le signal ainsi amplifié est ensuite envoyé, au travers d'un filtre en L 50 au moteur du vérin série.

L'amplificateur de puissance 46 est par ailleurs alimenté par une tension 54 de 28 volts par l'intermédiaire d'un circuit interrupteur 48 et d'un limiteur/disjoncteur de courant 47, et le signal qu'il délivre en sortie est envoyé au coeur numérique qui peut ainsi, notamment en phase de tests prévol, surveiller les commandes appliquées au vérin série au travers d'un autre circuit d'isolation galvanique 51.

Par ailleurs, l'amplificateur de puissance à pont en H 46 utilisé dans le circuit de commande (figure 8) peut être inhibé par une action manuelle du pilote, soit directement par l'intermédiaire de l'entrée 56, soit en envoyant un signal 53 pour actionner l'interrupteur de coupure d'alimentation 48.

La figure 9 représente le circuit de commande de puissance du moteur du vérin de "trim". Ce circuit reçoit en entrée, d'une part les commandes impulsionnelles élaborées par le coeur numérique qui fournissent le sens et la vitesse de rotation du vérin de "trim" 3, et d'autre part, des commandes logiques élaborées par un dispositif matériel 71, qui indiquent le sens de rotation du vérin de "trim". Ce dispositif 71 élabore ces commandes de sens à l'aide d'un comparateur à seuils, directement à partir de la position du vérin série 2 associé, auquel il est connecté. La position du vérin série 2 est ainsi comparée à zéro pour délivrer en sortie un signal logique représentatif du signe de la position du vérin série, relativement à une position centrale.
Il convient ici de préciser que le dispositif 71 est complètement indépendant du coeur numérique. Par ailleurs, il est connecté à un capteur de position du vérin série (2) indépendant de celui qui est utilisé dans l'élaboration de la commande de puissance de ce vérin.

Les commandes impulsionnelles et logiques sont envoyées, au travers d'un étage d'adaptation 70 et d'un étage d'isolation galvanique 72, à un amplificateur à pont en H 73.

Une fois amplifiées, ces commandes attaquent le moteur du vérin de "trim" par l'intermédiaire d'un filtre en L 76, et sont envoyées au coeur numérique 20 par l'intermédiaire d'un circuit d'isolation galvanique 77.
L'amplificateur de puissance est alimenté en 28 volts 79 de manière indépendante du reste du circuit de commande de puissance 26, par l'intermédiaire d'un interrupteur 75 et d'un limiteur/disjoncteur de courant 74.

La commande du vérin de "trim" est ainsi sécurisée de plusieurs manières.
Tout d'abord, l'amplificateur de puissance 73 est conçu de manière à ne délivrer un signal de commande du vérin de "trim" que si les commandes de sens élaborées d'une part par le coeur numérique 20 et d'autre part, par le dispositif matériel 71, indiquent le même sens. Si les sens de déroulement indiqués par ces commandes sont différents, le moteur de "trim" n'est pas commandé et reste donc bloqué.
Ce moteur peut aussi être bloqué en coupant l'alimentation de l'amplificateur de puissance 73 par l'intermédiaire de l'interrupteur 75 commandé par le signal 80, ou en activant la commande d'inhibition 78 de l'amplificateur.
De plus, les commandes de puissance sont isolées galvaniquement par l'étage 77, et sont envoyées au coeur numérique 20 qui peut alors vérifier que les commandes ainsi générées sont cohérentes avec la position du vérin série.
Grâce à ces dispositions, le circuit de commande de puissance du moteur du vérin de "trim" est complètement indépendant du reste du circuit de commande de puissance 26. Ainsi, une panne du coeur numérique 20 ou du circuit de commande de puissance du vérin série 2 entraîne systématiquement le blocage du "trim".

Le circuit de gestion des entrées et sorties 27 représenté sur la figure 10 comprend par exemple deux fois 16 entrées et sorties de données booléennes, respectivement 16EB et 16SB, 32 entrées analogiques 32EA et 4 sorties analogiques 4SA. Les entrées booléennes sont reliées à un sérialiseur 33 par l'intermédiaire d'un circuit d'adaptation 32. Ce circuit comprend également un bus 30 relié au coeur numérique 20 et par lequel transitent les données en entrée et en sortie et des signaux CS de sélection de voie. Lorsque l'un des sérialiseurs 33 reçoit du coeur numérique 20 un signal CS, il transfère les données qu'il reçoit sous forme parallèle en entrée, sous forme série sur le bus 30. Pour commander le transfert de données booléennes vers l'une des sorties 16SB, à destination des autres équipements de l'hélicoptère, le coeur numérique 20 sélectionne l'un des désérialiseurs 34 en lui envoyant un signal CS, ce qui provoque le transfert des données présentes sur le bus 30 vers la sortie 16SB correspondante sous forme parallèle, au travers d'un autre circuit d'adaptation 32.

Le circuit de gestion 27 des entrées et sorties peut également traiter des données analogiques. Pour cela, il comprend un convertisseur analogique/numérique 35 permettant de transformer en valeurs numériques les données analogiques présentées sur l'entrée 32EA et traversant un circuit d'adaptation 37. Pour recevoir ces données analogiques, le coeur numérique 20 envoie par l'intermédiaire du bus 30 un signal de sélection CS à destination de ce convertisseur 35 qui transfère alors sous forme numérique sur le bus 30 les données analogiques qu'il reçoit en entrée.
Le bus 30 comprend deux parties isolées l'une de l'autre par un dispositif d'isolation galvanique 31, de manière à séparer la partie qui gère les données numériques de la partie qui gère les signaux analogiques.

Pour émettre des données analogiques vers les autres équipements de l'hélicoptère, le coeur numérique 20 sélectionne le convertisseur numérique/analogique 36 en lui envoyant un signal CS. Les données qui transitent sur le bus 30 sont alors transformées sous forme analogique et envoyées vers la sortie des données analogiques 4SA par l'intermédiaire d'un circuit d'adaptation 37.

Ce circuit 27 comprend également un circuit d'isolation galvanique permettant d'isoler la portion de bus 30 dans laquelle transitent les données booléennes de celle dans laquelle transitent les données analogiques et qui est reliée au coeur numérique 20.

De la description des circuits de commande de puissance 26 et de gestion des entrées et sorties 27, il apparaît que ces circuits peuvent présenter une architecture très variable d'une configuration de calculateur à une autre pour s'adapter le plus finement possible à l'équipement de l'hélicoptère. C'est pourquoi ils sont avantageusement disposés sur un ou deux modules enfichables 23,23',23'', la présence du module 23' dépendant du type d'actionneurs, avec ou sans commande de puissance intégrée, équipant l'hélicoptère.

Il faut noter par ailleurs que le nombre d'entrées et sorties que doit comporter le circuit 27 dépend non seulement de l'équipement de l'hélicoptère et des fonctions réalisées par le coeur numérique, mais aussi des fonctions réalisées par le circuit 26 de commande de puissance.

Il va de soi que les connecteurs 24,25 sont adaptés à toutes les versions possibles de ces deux circuits 26,27 et donc à toutes les configurations de modules enfichables prévues.
Ils comprennent donc une multiplicité de points de connexion qui ne sont pas systématiquement tous utilisés dans toutes les configurations du module enfichable. Dans cette optique, lors de l'initialisation du calculateur, la fonction d'auto-configuration du coeur numérique 20 comprend avantageusement :
- des moyens pour déterminer le nombre et le type, booléen ou analogique, des entrées et des sorties gérées par le module enfichable 23 ou 23'',
- des moyens pour détecter la présence du module 23' supportant le circuit de commande de puissance, et
- des moyens pour déterminer quelles sont les commandes de puissance réalisées par le circuit de commande de puissance 26, c'est-à-dire, pour détecter la présence du circuit de commande du vérin série 2, du circuit de commande de recentrage du vérin série 2, et du circuit de commande du vérin de "trim" 3.

Par ailleurs, pour pouvoir s'adapter à toutes les configurations prévues de modules enfichables, le logiciel de commande du coeur numérique 20 comprend toutes les fonctions nécessaires pour contrôler le ou les modules enfichables 23,23'23'' qui présentent les configurations les plus complètes.

L'architecture matérielle et logicielle présentée précédemment permet d'adapter très finement le dispositif de pilotage automatique aux caractéristiques de vol de chaque hélicoptère et à la mission à laquelle ce dernier est destiné.

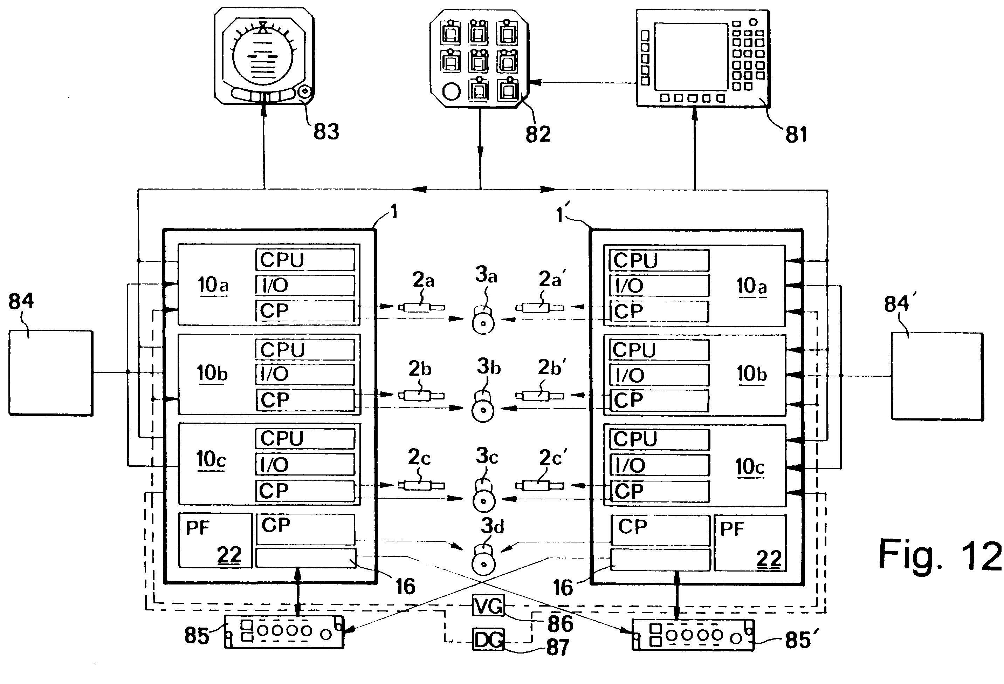

Ainsi, la figure 11 montre une configuration de calculateur 1 qui permet d'obtenir un dispositif de pilotage automatique simultanément sur les trois axes de pilotage. Pour cela, le calculateur 1 comprend trois modules 10, chacun étant relié d'une part, à son propre ensemble de capteurs, respectivement 60,65,66, et d'autre part, à ses propres actionneurs 2,3.
Seules les chaînes de commande actives, 61 et 62, de chaque module 10, qui actionnent, respectivement, le vérin série 2 et le vérin de "trim" 3 ont été indiquées. Ces chaînes de commande incluent à la fois les fonctions correspondantes réalisées par le coeur numérique 20, ainsi que celles réalisées par le circuit de puissance 26 et le circuit 27 de gestion des entrées et sorties.

Comme précédemment mentionné, ce dispositif de pilotage automatique peut réaliser des fonctions de pilotage de haut niveau. Pour cela, le calculateur peut être connecté à un boîtier de commande placé dans le cockpit. Ces fonctions de pilotage concernent :
- le maintien de l'appareil à une altitude constante,
- le maintien de la vitesse de l'appareil,
- le maintien d'un cap,
- le suivi de balises de radionavigation, ...

Ainsi, le dispositif de pilotage automatique représenté sur la figure 12 assure le pilotage suivant quatre axes, à savoir tangage, roulis, lacet et collectif, et afin d'assurer une grande sécurité de fonctionnement, il comprend deux chaînes de commande des gouvernes par axe de pilotage.

Pour cela, ce dispositif comprend deux calculateurs 1 et 1', chacun étant équipé de trois modules de calcul 10a,10b,10c assurant le pilotage automatique suivant respectivement les axes de tangage, roulis et lacet. Chacun de ces axes de pilotage est équipé de deux vérins série 2a,2a' - 2b,2b' - 2c,2c' montés en série sur la timonerie de la gouverne correspondante et d'un vérin de "trim" 3a,3b,3c. les deux vérins série de chaque axe de pilotage sont contrôlés respectivement par les deux calculateurs 1,1', tandis que chaque vérin de "trim" est actionné par les deux calculateurs.

Les deux calculateurs 1,1' reçoivent par l'intermédiaire d'un réseau utilisé suivant un protocole particulier tel que ARINC 429, des informations en provenance :
- d'un calculateur de navigation 81,
- d'un calculateur directeur de vol qui assure le pilotage à partir des consignes fournies par le calculateur de navigation,
- d'un indicateur d'attitude 83,
- d'une centrale de référence horizontale et d'attitude respective 84,84', et
- éventuellement d'une référence gyroscopique d'attitude verticale et directionnelle 86,87.

Les modules de calcul 10a,10b,10c sont équipés chacun d'un coeur numérique "CPU", d'un module de gestion des entrées et sorties "I/O" et d'un module de commande de puissance "CP". Par ailleurs, les modules de calcul des deux calculateurs 1,1' sont interconnectés de manière à, d'une part, commander l'un des deux vérins série, par exemple 2a,2b,2c et le vérin de "trim" 3a,3b,3c de l'axe de pilotage correspondant, et d'autre part, surveiller le bon fonctionnement de la chaîne de commande de l'autre vérin série 2a',2b',2c'. De cette manière, si une incohérence apparait entre les chaînes de commande des deux vérins série 2a,2a' d'un même axe de pilotage, ces deux vérins série sont recentrés automatiquement, et le pilotage automatique suivant l'axe correspondant est mis en veille.

Avantageusement, les calculateurs 1,1' sont équipés d'un circuit filtrage et de protection contre les effets de la foudre et des rayonnements électromagnétiques 22, d'une carte d'interface 16 avec un poste de commande 85,85' et d'un module de commande de puissance "CP" permettant d'actionner le vérin de "trim" 3d de commande du collectif de l'hélicoptère.

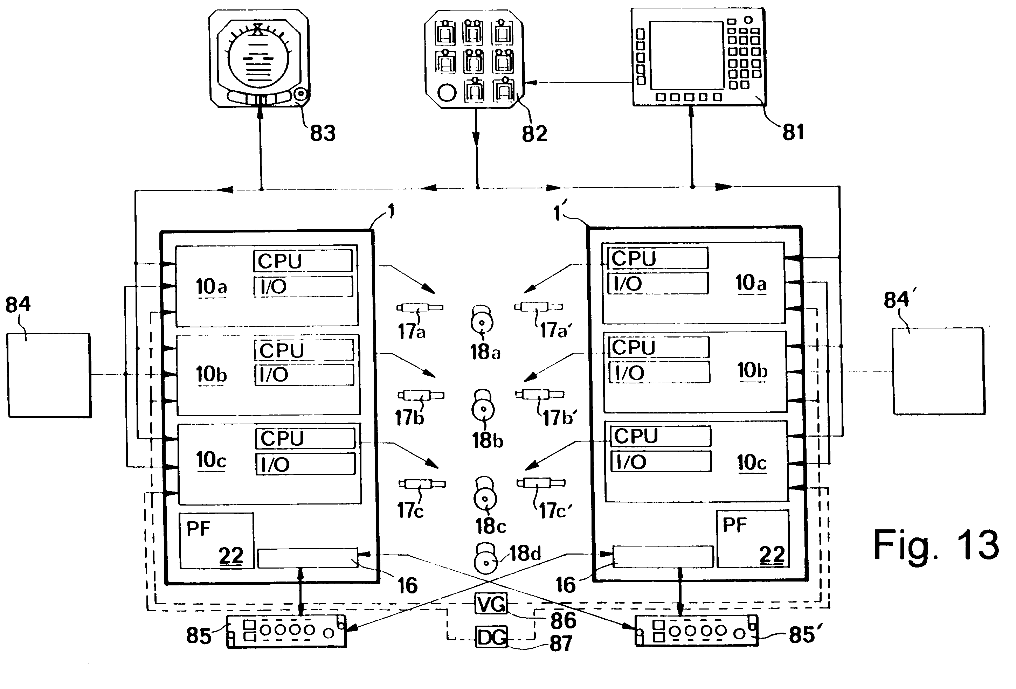

La configuration représentée sur la figure 13 met en oeuvre des actionneurs de type vérin série 17a,17a' - 17b,17b' - 17c,17c' et de "trim" 18a,18b,18c dits "intelligents", c'est-à-dire qu'ils sont équipés de leur propre circuit de commande de puissance. Ainsi les modules de calcul 10a, 10b,10c équipant les deux calculateurs 1,1' n'ont pas besoin de module de circuit de puissance enfichable et toutes les connexions des deux calculateurs avec les actionneurs et les autres équipements de l'hélicoptère sont réalisées par le même réseau.
Ainsi, grâce à la modularité des calculateurs 1,1', il est possible de simplifier de manière importante le dispositif de la figure 12, tout en conservant les mêmes fonctionnalités et le même niveau de sécurité.

## Revendications

1. Dispositif de pilotage automatique d'un aérodyne faisant intervenir au moins un calculateur numérique recevant des informations émanant d'un ensemble de capteurs (4), et assurant la commande d'actionneurs (2,3) agissant sur les gouvernes,
caractérisé en ce que le calculateur (1) comporte au moins un module de calcul (10) comprenant :
- des moyens (20) pour calculer et engendrer les commandes de pilotage à appliquer aux actionneurs agissant sur l'un quelconque des trois axes de pilotage, en fonction des informations fournies par les capteurs,
- des moyens de connexion (5) pour connecter les moyens de calcul aux capteurs (4) et aux actionneurs (2,3) correspondant à l'un quelconque des trois axes de pilotage, et
- des moyens pour configurer les moyens de calculs (20) pour qu'ils effectuent le pilotage automatique selon l'axe de pilotage correspondant aux actionneurs (2,3) auxquels les moyens de connexion (5) sont raccordés.

2. Dispositif selon la revendication 1,
caractérisé en ce qu'il comprend des moyens pour définir un code d'identification propre à chaque axe de pilotage, chaque module comprenant des moyens de lecture de ce code d'identification afin de s'auto-configurer en fonction de l'axe selon lequel il doit assurer le pilotage.

3. Dispositif selon la revendication 2,
caractérisé en ce que les moyens de connexion (5) présentent une multiplicité de points de connexion, et coopèrent avec un connecteur extérieur (6) rassemblant les extrémités des liaisons électriques reliées à l'ensemble des capteurs (4) et aux actionneurs (2,3) correspondant à un axe de pilotage, les moyens pour définir un code d'identification propre à chaque axe de pilotage étant réalisés en interconnectant, selon un schéma spécifique à chaque axe, un ensemble prédéterminé de points de connexion (25) du connecteur extérieur (6).

4. Dispositif selon l'une des revendications précédentes,
caractérisé en ce que chaque module de calcul (10) comprend :
- un coeur numérique 20 comportant un microprocesseur commandé par un logiciel identique quelque soit l'axe selon lequel il doit assurer le pilotage,
- un circuit de commande de puissance (26) qui lui permet de commander directement les actionneurs (2,3),
- un circuit d'alimentation (21),
- un circuit de gestion des entrées et sorties (27), et
- un circuit de filtrage et de protection contre les effets de la foudre et des rayonnements électromagnétiques (22).

5. Dispositif selon la revendication 4,
caractérisé en ce que chaque module de calcul (10) comprend au moins un module enfichable (23) regroupant le circuit (27) de gestion des entrées et des sorties du module de calcul (10), et éventuellement, le circuit (26) de commande de puissance des actionneurs (2,3).

6. Dispositif selon l'une des revendications 4 et 5,
caractérisé en ce que chaque module de calcul (10) comprend deux modules enfichables (23',23''), l'un (23') incluant le circuit (26) de commande de puissance des actionneurs, et l'autre (23'') le circuit (27) de gestion des entrées et des sorties du module de calcul (10).

7. Dispositif selon l'une des revendications 5 et 6,
caractérisé en ce que chaque module de calcul (10) comprend en outre :
- des moyens pour déterminer le nombre et le type, booléen ou analogique, des entrées et des sorties gérées par le module enfichable (23 ou 23''),
- des moyens pour détecter la présence du module (23') supportant le circuit de commande de puissance (26), et
- des moyens pour déterminer quelles sont les commandes de puissance réalisées par le circuit de commande de puissance (26).

8. Dispositif selon l'une des revendications 4 à 7,
caractérisé en ce que le circuit (27) de gestion des entrées et des sorties du module enfichable (23) comprend des moyens (33 à 36) pour recevoir et émettre des données numériques et analogiques.

9. Dispositif selon l'une des revendications 5 à 8,
caractérisé en ce que le logiciel de commande du coeur numérique (20) comprend toutes les fonctions nécessaires pour contrôler le ou les modules enfichables (23,23',23'') qui présentent les configurations les plus complètes.

10. Dispositif selon l'une des revendications 3 et 4,
caractérisé en ce que chaque module de calcul (10) est réalisé en une seule carte électronique comprenant lesdits moyens de connexion (5).

11. Dispositif selon l'une des revendications 3 à 10,
caractérisé en ce que le calculateur (1) ne comporte aucun connecteur interne assurant une interconnexion entre les modules de calcul (10), des interconnexions entre modules calcul pouvant être réalisées au niveau de leurs connecteurs extérieurs (6) respectifs.

12. Dispositif selon l'une des revendications précédentes,
caractérisé en ce que les actionneurs (2,3) pour chacun des axes de pilotage sont composés d'un vérin série (2) dont le mouvement est très rapide et l'autorité faible, placé en série sur la timonerie des gouvernes considérées, et d'un vérin de "trim" (3) dont le mouvement est plus lent et de pleine autorité, capable de déplacer l'ensemble de la timonerie desdites gouvernes pour recentrer la position du vérin série 2, et en ce que le circuit de commande de puissance (26) comprend des moyens pour élaborer les commandes de puissance du vérin série (2) et du vérin de "trim" (3), à partir de consignes calculées par le coeur numérique (20), à l'aide des lois de pilotage, et à partir de la valeur de la position du vérin série (2).

13. Dispositif selon la revendication 12,
caractérisé en ce que le circuit de commande de puissance (26) comprend des moyens pour commander le vérin de "trim" (3), uniquement si la commande à appliquer au "trim" est cohérente avec la position du vérin série (2).

14. Dispositif selon la revendication 13,
caractérisé en ce que la consigne de commande du vérin de "trim" (3) appliquée par le coeur numérique (20) au circuit de commande de puissance (26) est constituée d'une vitesse et d'un sens de rotation, et en ce que le circuit de commande de puissance (26) comprend des moyens (71) pour élaborer une autre commande de sens rotation du "trim" à partir de la valeur de la position du vérin série (2), et des moyens pour commander le vérin de "trim" (3), uniquement si les deux commandes de sens de rotation du vérin de "trim" (3) sont identiques.

## Patentansprüche

1. Autopilot-Vorrichtung für ein Luftfahrzeug, die mindestens einen digitalen Rechner verwendet, der von einer Einheit von Meßsonden (4) kommende Informationen empfängt und der Betätigungsglieder (2, 3) steuert, die auf die Steuerungen einwirken,
dadurch gekennzeichnet, daß der Rechner (1) mindestens einen Rechenmodul (10) aufweist, der enthält:
- Mittel (20), um die Steuerbefehle zu berechnen und zu erzeugen, die an die Betätigungsglieder angelegt werden, die auf eine beliebige der drei Fluglagenregelungsachsen in Abhängigkeit von den von den Meßsonden gelieferten Informationen einwirken,
- Anschlußmittel (5), um die Rechenmittel mit den Meßsonden (4) und den Betätigungsgliedern (2, 3) zu verbinden, die einer der drei Fluglagenregelungsachsen entsprechen, und
- Mittel, um die Rechenmittel (20) so zu konfigurieren, daß sie die automatische Fluglagenregelung gemäß der Fluglagenregelungsachse durchführen, die den Betätigungsgliedern (2, 3) entspricht, an die die Anschlußmittel (5) angeschlossen sind.

2. Vorrichtung nach Anspruch 1, dadurch gekennzeichnet, daß sie Mittel aufweist, um einen jeder Fluglagenregelungsachse eigenen Identifikationskode zu definieren, wobei jeder Modul Mittel zum Lesen dieses Identifikationskodes aufweist, um sich selbst in Abhängigkeit von der Achse zu konfigurieren, gemäß der er die Fluglagenregelung durchführen soll.

3. Vorrichtung nach Anspruch 2, dadurch gekennzeichnet, daß die Anschlußmittel (5) eine Vielzahl von Anschlußpunkten aufweisen und mit einem äußeren Verbinder (6) zusammenwirken, der die Enden der mit der Einheit von Meßsonden (4) und den einer Fluglagenregelungsachse entsprechenden Betätigungsgliedern (2, 3) verbundenen elektrischen Verbindungen zusammenfaßt, wobei die Mittel zur Definition eines jeder Fluglagenregelungsachse eigenen Identifikationskodes erhalten werden, indem gemäß einem für jede Achse spezifischen Schema eine vorbestimmte Einheit von Verbindungspunkten (25) des äußeren Verbinders (6) miteinander verbunden wird.

4. Vorrichtung nach einem der vorhergehenden Ansprüche, dadurch gekennzeichnet, daß jeder Rechenmodul (10) aufweist:
- einen digitalen Kern (20), der einen Mikroprozessor enthält, der von einer Software gesteuert wird, die unabhängig von der Achse, gemäß der er die Fluglagenregelung durchführen soll, gleich ausgebildet ist,
- eine Leistungssteuerschaltung (26), die es ihm ermöglicht, die Betätigungsglieder (2, 3) direkt zu steuern,
- eine Speiseschaltung (21),
- eine Verwaltungsschaltung für die Eingänge und Ausgänge (27) und
- eine Filter- und Schutzschaltung (22) gegen die Wirkung des Blitzschlags und der elektromagnetischen Strahlungen.

5. Vorrichtung nach Anspruch 4, dadurch gekennzeichnet, daß jeder Rechenmodul (10) mindestens einen einsteckbaren Modul (23) aufweist, der die Verwaltungsschaltung (27) der Eingänge und Ausgänge des Rechenmoduls (10) und ggf. die Leistungssteuerschaltung (26) der Betätigungsglieder (2, 3) umfaßt.

6. Vorrichtung nach einem der Ansprüche 4 und 5, dadurch gekennzeichnet, daß jeder Rechenmodul (10) zwei einsteckbare Moduln (23', 23") aufweist, von denen der eine (23') die Leistungssteuerschaltung (26) der Betätigungsglieder und der andere (23") die Verwaltungsschaltung (27) der Eingänge und Ausgänge des Rechenmoduls (10) umfaßt.

7. Vorrichtung nach einem der Ansprüche 5 und 6, dadurch gekennzeichnet, daß jeder Rechenmodul (10) außerdem aufweist:
- Mittel, um die Anzahl und die Art, logisch oder analog, der Eingänge und Ausgänge zu bestimmen, die vom einsteckbaren Modul (23 oder 23") verwaltet werden,
- Mittel, um das Vorhandensein des Moduls (23') zu erfassen, der die Leistungssteuerschaltung (26) trägt, und
- Mittel, um zu bestimmen, welches die Leistungssteuerungen sind, die von der Leistungssteuerschaltung (26) ausgeführt werden.

8. Vorrichtung nach einem der Ansprüche 4 bis 7, dadurch gekennzeichnet, daß die Verwaltungsschaltung (27) der Eingänge und Ausgänge des einsteckbaren Moduls (23) Mittel (33 bis 36) aufweist, um digitale und analoge Daten zu empfangen und zu senden.

9. Vorrichtung nach einem der Ansprüche 5 bis 8, dadurch gekennzeichnet, daß die Steuerungs-Software des digitalen Kerns (20) alle notwendigen Funktionen enthält, um den oder die einsteckbaren Moduln (23, 23', 23") zu steuern, die die vollständigsten Konfigurationen aufweisen.

10. Vorrichtung nach einem der Ansprüche 3 und 4, dadurch gekennzeichnet, daß jeder Rechenmodul (10) aus einer einzigen Elektronikkarte besteht, die die Anschlußmittel (5) enthält.

11. Vorrichtung nach einem der Ansprüche 3 bis 10, dadurch gekennzeichnet, daß der Rechner (1) keinerlei inneren Verbinder aufweist, der eine Verbindung zwischen den Rechenmoduln (10) gewährleistet, während Verbindungen zwischen den Rechenmoduln in Höhe ihrer äußeren Verbinder (6) hergestellt werden können.

12. Vorrichtung nach einem der vorhergehenden Ansprüche, dadurch gekennzeichnet, daß die Betätigungsglieder (2, 3) für jede Fluglagenregelungsachse aus einem Serienzylinder (2), dessen Bewegung sehr schnell und dessen Wirksamkeit schwach ist und der in Serie auf dem Lenkgestänge der betreffenden Steuerungen angeordnet ist, und aus einem "Trimm"-Zylinder (3) bestehen, dessen Bewegung langsamer und mit voller Wirksamkeit ist und der die Gesamtheit des Lenkgestänges der Steuerungen verschieben kann, um die Position des Serienzylinders (2) neu zu zentrieren, und daß die Leistungssteuerschaltung (26) Mittel aufweist, um die Leistungssteuerungen des Serienzylinders (2) und des "Trimm"-Zylinders (3) ausgehend von Sollwerten auszuarbeiten, die vom digitalen Kern (20) berechnet werden mit Hilfe der Steuerungsgesetze und ausgehend von dem Wert der Position des Serienzylinders (2).

13. Vorrichtung nach Anspruch 12, dadurch gekennzeichnet, daß die Leistungssteuerschaltung (26) Mittel aufweist, um den "Trimm"-Zylinder (3) nur dann zu steuern, wenn der an den "Trimm"-Zylinder anzulegende Befehl mit der Position des Serienzylinders (2) kohärent ist.

14. Vorrichtung nach Anspruch 13, dadurch gekennzeichnet, daß der Steuer-Sollwert des "Trimm"-Zylinders (3), der vom digitalen Kern (20) an die Leistungssteuerschaltung (26) angelegt wird, aus einer Geschwindigkeit und einer Drehrichtung besteht und daß die Leistungssteuerschaltung (26) Mittel (71), um einen weiteren Befehl für die Drehrichtung des "Trimm"-Zylinders ausgehend vom Wert der Position des Serienzylinders (2) auszuarbeiten, und Mittel aufweist, um den "Trimm"-Zylinder (3) nur dann zu steuern, wenn die beiden Befehle der Drehrichtung des "Trimm"-Zylinders (3) identisch sind.

## Claims

1. An automatic piloting device for an aerodyne using at least one digital computer receiving information from a set of sensors (4) controlling actuators (2, 3) acting on the flight control surfaces, characterized in that said computer (1) comprises at least one computing module (10) comprising :
- a means (20) for computing and generating the piloting commands to be applied to the actuators acting on any one of the three piloting axes according to the information supplied by the sensors ;
- a connecting means (5) to connect the computing means to the sensors (4) and actuators (2, 3) corresponding to any one of the three piloting axes ; and
- means for configuring the computing means (20) so that they implement the automatic piloting according to the piloting axis corresponding to the actuators (2, 3) to which the connecting means (5) is connected.

2. The device as claimed in claim 1, characterized in that it further comprises a means for defining an identification code specific to each piloting axis, each module comprising a means for reading said identification code, in order to configure itself as a function of the axis according to which it must pilot.

3. The device as claimed in claim 2, characterized in that the connection means (5) comprises multiple connection points and cooperates with an external connector (6) grouping together the ends of the electrical links connected to the set of sensors (4) and to the actuators (2, 3) corresponding to a piloting axis, said means for defining an identification code specific to each piloting axis being obtained by interconnecting, according to a specific chart for each axis, a predetermined set of connection points (25) of said external connector (6).

4. The device as claimed in one of the preceding claims, characterized in that each computing module (10) comprises:
- a digital heart (20) comprising notably a microprocessor controlled by identical software irrespective of the axis according to which it must pilot,
- a power control circuit (26) enabling it to directly control the actuators (2, 3),
- a feed circuit (21),
- an I/O management circuit (27), and
- a filtering and protection circuit for protection against the effects of lightning and electromagnetic radiation (22).

5. The device as claimed in claim 4, characterized in that each computing module (10) comprises at least one plug-in module (23) grouping together the circuit (27) managing the inputs and outputs of said computing module (10), and possibly, the circuit (26) controlling power to said actuators (2, 3).

6. The device as claimed in one of claims 4 and 5, characterized in that each computing module (10) comprises two plug-in modules (23', 23"), one (23') including said circuit (26) controlling power to said actuators, and the other (23") including said circuit (27) managing said inputs and outputs of said computing module (10).

7. The device as claimed in one of claims 5, and 6, characterized in that each computing module (10) further comprises:
- a means for determining the number and type (Boolean or analog) of the inputs and outputs managed by said plug-in module (23 or 23"),
- a means for detecting the presence of said module (23') supporting said power control circuit (26), and
- a means for determining which power commands are performed by said power control circuit (26).

8. The device as claimed in one of claims 4 to 7, characterized in that said circuit (27) managing said inputs and outputs of said plug-in module (23) comprises a means (33 to 36) for receiving and transmitting digital and analog data.

9. The device as claimed in one of claims 5 to 8, characterized in that the software controlling said digital heart (20) comprises all the functions required to control the plug-in module(s) (23, 23', 23") with the most complete configurations.

10. The device as claimed in one of claims 3 and 4, characterized in that each computing module (10) is made of a single electronic board comprising said connection means (5).

11. The device as claimed in one of claims 3 to 10, characterized in that said computer (1) does not comprise any internal connector interconnecting said computing modules (10), interconnections between computing modules being susceptible of being obtained at their respective external connectors (6).

12. The device as claimed in one of the preceding claims, characterized in that said actuators (2, 3) for each of said piloting axes are comprised of a series thrustor (2) with very fast motion and low authority, placed in series on the rods of the flight control surface under consideration, and a trim thrustor (3) with slower motion and full authority, capable of displacing all the rods of said flight control surfaces to recenter the position of said series thrustor (2), and in that the power control circuit (26) comprises a means for generating power commands for the series thrustor (2) and trim thrustor (3), from instructions computed by the digital heart (20), by means of the piloting laws, and from the value of the position of the series thrustor (2).

13. The device as claimed in claim 12, characterized in that said power control circuit (26) comprises a means for controlling said trim thrustor (3) only if the command to be applied to the trim is consistent with the position of said series thrustor (2).

14. The device as claimed in claim 13, characterized in that the instruction commanding said trim thrustor (3) applied by said digital heart (20) to said power control circuit (26) is comprised of a speed and a direction of rotation, and in that said power control circuit (26) comprises a means (71) for generating another trim rotation direction command from the value of the position of said series thrustor (2), and a means for controlling said trim thrustor (3) only if said two trim thrustor (3) rotation direction commands are identical.
